# EUROPEAN PATENT APPLICATION

(11) **EP 4 844 247 A1**
(43) Date of publication of application: **25.11.2026**
(21) Application number: 26176188.6
(22) Date of filing: 04.05.2026
(51) Int. Cl.: F16J 15/08, F16J 15/12

(54) **GASKET AND SEALING STRUCTURE**

(30) Priority: 20.05.2025 JP 2025083975
(71) Applicant: NOK Corporation, Minato-ku Tokyo 105-8585 (JP)
(72) Inventor: OCHIAI, Kenta, Nihonmatsu-shi, Fukushima, 964-0811 (JP)
(74) Representative: TBK

(57) **Abstract**

A gasket is disposed between a pair of housings. The gasket includes a laminate that includes a plate-like base including a metal. A resilient layer is provided on the base, and a coating layer capable of plastic deformation is provided on the resilient layer. The laminate is configured to have an annular outer rim, and an annular bead located radially inward of the outer rim and connected to the outer rim. In plan view from a thickness direction of the laminate, the coating layer overlaps at least a boundary between the outer rim and the bead.

## Description

### CROSS REFERENCE TO RELATED APPLICATION

This Application is based on, and claims priority from, Japanese Patent Application No. 2025-083975, filed on May 20, 2025, the entire content of which is incorporated herein by reference.

### BACKGROUND OF THE INVENTION

### Field of the Invention

The present invention relates to gaskets and sealing structures.

### Related Art

Various types of gaskets for use between a pair of housings have been proposed. Such gaskets used, for example, for vehicle housings are required to be durable, and to be able to withstand driving conditions in coastal areas or cold regions where de-icing salts are applied. For this reason, a salt spray test may be included in evaluating a specification of a gasket.

There is a risk that saltwater may ingress into a fine gap between a gasket and a metal housing, and under repeated drying and ingress crevice corrosion may occur. If crevice corrosion occurs in a surface of the housing that contacts the gasket, pitting corrosion is likely to develop in the contact surface. Consequently, a sealing performance of the gasket is likely to degrade, allowing fluid from outside the housing to infiltrate between the gasket and the corroded area of the housing surface, and to enter the interior of the housing.

Japanese Patent Application Laid-Open Publication 2013-61002 (hereafter, JP 2013-61002) discloses a gasket that has an outer rim, a bead bent along the inner periphery of the outer rim, and a bent portion along the outer periphery of the outer rim. According to this gasket, a gap between the gasket and the housing is closed and sealed under a reaction force of the bead. Furthermore, the bent portion reduces a volume of saltwater within the gap between the gasket and the housing, thereby inhibiting corrosion.

However, since the gasket disclosed in JP 2013-61002 includes the bent portion, an overall width of the gasket is greater than that of a conventional gasket. Furthermore, a configuration that includes one bent portion and one bead is equivalent to a configuration that includes two beads. The greater a number of beads, the greater a reaction force, and thus the greater the rigidity that is required for a mating housing. However, increasing a housing rigidity is undesirable in view of trends toward a need for lighter housings.

### SUMMARY

Accordingly, with a view to corrosion resistance, development of a new gasket that minimizes ingress of fluid into the interior of the housing is desired.

A gasket according to one aspect of the present disclosure is a gasket disposed between a pair of housings, and the gasket includes a laminate including: a plate-like base including a metal; and a resilient layer provided on the base; and a coating layer provided on the resilient layer and subject to plastic deformation, in which the laminate includes: an annular outer rim, and an annular bead located radially inward of the outer rim and connected to the outer rim; and in plan view from a thickness direction of the laminate, the coating layer overlaps at least a boundary between the outer rim and the bead.

A gasket according to one aspect of the present disclosure is a gasket disposed between a pair of housings, and the gasket includes: a laminate including: a plate-like base including a metal; and a resilient layer provided on the base; and a coating layer provided on the resilient layer and subject to plastic deformation, in which the laminate includes: an annular outer rim; and an annular bead located radially inward of the outer rim and connected to the outer rim; in plan view from a thickness direction of the laminate, the coating layer overlaps at least a boundary between the outer rim and the bead; and when sandwiched and compressed between the pair of housings, the coating layer deforms and increases a contact width between the coating layer and a surface of one of the pair of housings.

A gasket according to one aspect of the present disclosure is a gasket disposed between a pair of housings, and the gasket includes: a laminate including: a plate-like base including a metal; and a resilient layer provided on the base; and a coating layer provided on the resilient layer and subject to plastic deformation, in which the laminate includes: an annular outer rim; and an annular bead located radially inward of the outer rim and connected to the outer rim; in plan view from the thickness direction of the laminate, the coating layer overlaps at least a boundary between the outer rim and the bead; and, when sandwiched and compressed between the pair of housings, the coating layer deforms and increases an angle of the coating layer relative to a surface of one of the pair of housings.

A gasket according to one aspect of the present disclosure is a gasket disposed between a pair of housings, and the gasket includes: a laminate including: a plate-like base including a metal; and a resilient layer provided on the base; and a coating layer provided on the resilient layer and subject to plastic deformation, in which the laminate includes: an annular outer rim; and an annular bead located radially inward of the outer rim and connected to the outer rim; in plan view from the thickness direction of the laminate, the coating layer overlaps at least a boundary between the outer rim and the bead; and, when sandwiched and compressed between the pair of housings, the coating layer deforms to reduce a gap between the coating layer and a surface of one of the pair of housings.

A sealing structure according to one aspect of the present disclosure is a sealing structure comprising: a pair of housings; and a gasket disposed between the pair of housings, and the gasket includes: a laminate including: a plate-like base including a metal; and a resilient layer provided on the base; and a coating layer provided on the resilient layer and subject to plastic deformation, in which the laminate includes: an annular outer rim; and an annular bead located radially inward of the outer rim and connected to the outer rim; in plan view from the thickness direction of the laminate, the coating layer overlaps at least a boundary between the outer rim and the bead; and, when sandwiched and compressed between the pair of housings, the coating layer deforms to reduce a gap between the coating layer and a surface of one of the pair of housings.

### Effects of the disclosure

According to one aspect of the present disclosure, it is possible to minimize ingress of fluid into the interior of the housing. Consequently, a sealing performance of the gasket can be maintained for a prolonged period.

### BRIEF DESCRIPTION OF THE DRAWINGS

Fig. 1 is a plan view of a gasket according to an embodiment.
Fig. 2 is a plan view of a laminate in the gasket of Fig. 1.
Fig. 3 is a cross-sectional view of the gasket of Fig. 1.
Fig. 4 is a cross-sectional view of a sealing structure according to the embodiment.
Fig. 5 is a cross-sectional view showing a sealing structure according to a comparative example.
Fig. 6 is an enlarged view of a part of the gasket of Fig. 3.
Fig. 7 is a cross-sectional view of a gasket according to a first modification.
Fig. 8 is a cross-sectional view of a gasket according to a second modification.
Fig. 9 is a cross-sectional view of a gasket according to a third modification.
Fig. 10 is a cross-sectional view of a sealing structure according to the third modification.

### DETAILED DESCRIPTION OF THE EMBODIMENTS

The embodiments of the present disclosure will now be described with reference to the accompanying drawings. In the drawings, dimensions and scale of each element may be different from those of an actual product. In addition, the form described below is an exemplary form assumed when the present disclosure is implemented. Accordingly, the scope of the present disclosure is not limited to the forms exemplified below.

### A: Embodiment

### A1: Gasket 100

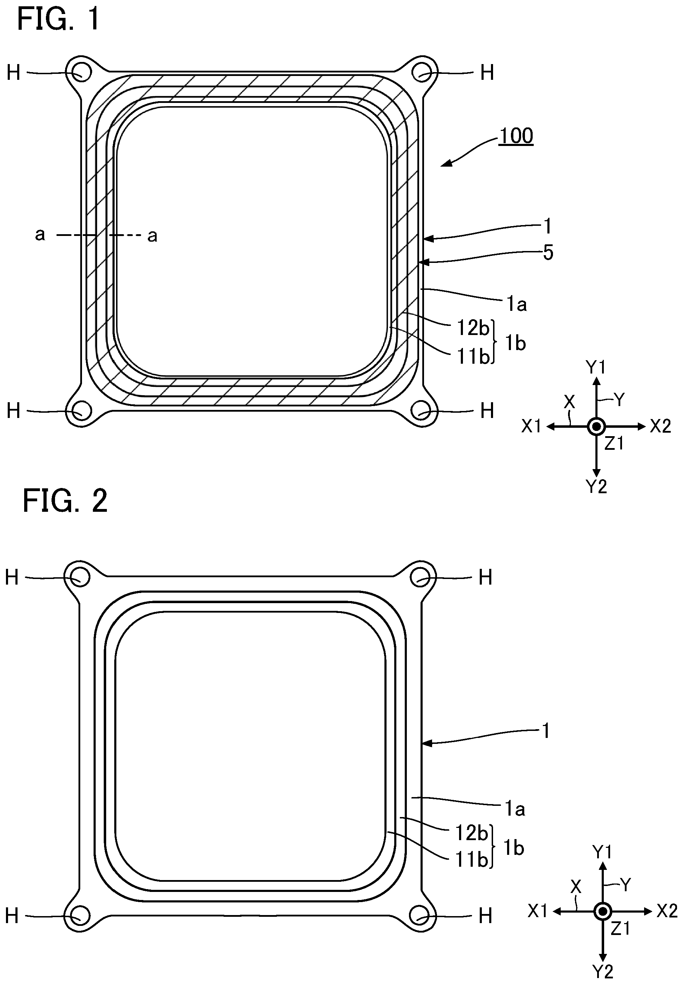

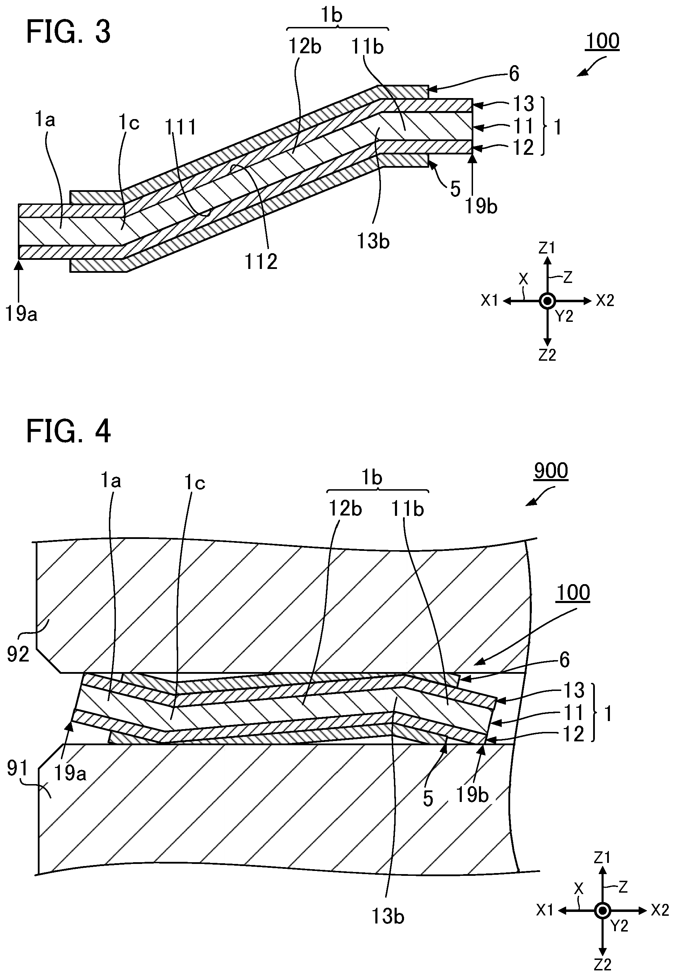

Fig. 1 is a plan view of a gasket 100 according to the embodiment. Fig. 2 is a plan view of a laminate 1 of the gasket 100 in Fig. 1. Fig. 3 is a cross-sectional view of the gasket 100 in Fig. 1. Fig. 3 corresponds to a cross-sectional view taken along line a-a in Fig. 1. Fig. 4 is a cross-sectional view of a sealing structure 900 according to the embodiment.

In the following description, for sake of convenience, reference is made to an X-axis, a Y-axis, and a Z-axis, as appropriate. The X-axis, Y-axis, and Z-axis are orthogonal to each other. In addition, a direction of an arrow along the X-axis is an X1 direction, and its opposite direction is an X2 direction. The same applies to the Y-axis and the Z-axis.

A gasket 100 shown in each of Figs. 1, 2, and 3 is, for example, a soft metal gasket. The sealing structure 900 shown in Fig. 4 includes the gasket 100 and a pair of housings 91 and 92. The sealing structure 900, for example, is installed in a vehicle such as an automobile. For example, the housing 91 is a case for accommodating electronic components, and the housing 92 is a cover for closing an opening of the case. Thus, the pair of housings 91 and 92 can be regarded as two opposing members.

The gasket 100 shown in Fig. 3 is in an initial state before being sandwiched between the pair of housings 91 and 92. The gasket 100 shown in Fig. 4 is sandwiched and compressed by the pair of housings 91 and 92.

In the example shown in Fig. 1, in plan view the gasket 100 is a square annulus. Here, "square annulus" refers to a shape composed of both straight and curved line segments that together form a closed loop for enclosing a space. The planar shape of the gasket 100 may be freely selected. For example, the planar shape of the gasket 100 may be circular, or may be a polygonal shape other than a square.

As shown in Fig. 3, the gasket 100 has a laminate 1, a plastic layer 5, and a plastic layer 6. The laminate 1 includes a base 11, a resilient layer 12, and a resilient layer 13. "Plan view" refers to a view along the Z-axis, which is the thickness direction of the laminate 1.

### A1-1: Laminate 1

The base 11 is a plate-like member that contains a metal. The base 11 has two main surfaces 111 and 112. The base 11 is, for example, a stainless steel plate, a cold-rolled steel plate, a galvanized steel plate, or an aluminum alloy plate. The thickness of the base 11 is not particularly limited, but is, for example, 0.1 mm or more and 1.0 mm or less.

Each of the resilient layers 12 and 13 is provided on the base 11. Specifically, the resilient layer 12 is provided on the main surface 111, and the resilient layer 13 is provided on the main surface 112. The base 11 is sandwiched between the resilient layer 12 and the resilient layer 13. The main surface 111 is pretreated by application of a lead phosphate coating, and the resilient layer 12 is bonded by an adhesive to the main surface 111, for example. Likewise, the main surface 112 is pretreated by application of a lead phosphate coating, and the resilient layer 13 is bonded by an adhesive to the main surface 112, for example.

Each of the resilient layers 12 and 13 is elastically deformable, and includes an elastic material. Specifically, each of the resilient layers 12 and 13 contains one or more rubber formulations selected from, for example, nitrile rubber, styrene-butadiene rubber, fluororubber, acrylic rubber, and silicone rubber. The resilient layers 12 and 13 are exemplified as being formed of the same material, but need not be formed of the same material.

The thickness of each of the resilient layers 12 and 13 is not particularly limited, but is, for example, 25 µm or more and 500 µm or less. The resilient layers 12 and 13 are exemplified as being of the same thickness but need not be of the same thickness. The thickness of the resilient layer 12 is exemplified as being constant, but need not be constant and may vary. Likewise, the thickness of the resilient layer 13 is exemplified as being constant, but need not be constant and may vary.

The resilient layers 12 and 13 are provided on the base 11, and exert a pressing force against the base 11, thereby improving a sealing performance of the gasket 100.

As shown in Figs. 2 and 3, the laminate 1 has an outer rim 1a, and a bead 1b. In plan view, the laminate 1 can be seen as being divided into the outer rim 1a and the bead 1b. Further, the laminate 1 has an inner edge 19b and an outer edge 19a.

The planar shape of the outer rim 1a is a square annulus. In plan view, the outer rim 1a is the radially outermost portion of the laminate 1. As shown in Fig. 3, in the initial state, the outer rim 1a is a flat plate extending along the X-Y plane. The outer rim 1a includes the outer edge 19a.

As shown in Fig. 2, the outer rim 1a is provided with four through holes H. The outer rim 1a is a square in plan view, and the through holes H are provided at the corners of the outer rim 1a. Each through hole H is an opening into which a fastener (not shown) for fixing the housing 91 and the housing 92 to each other is inserted.

The bead 1b is connected to the outer rim 1a and is located radially inward of the outer rim 1a. The planar shape of the bead 1b is a square annulus. The bead 1b is configured as a half-bead. The bead 1b is formed to project upward in one of the thickness directions of the laminate 1 from the inner edge of the outer rim 1a (i.e., the upward direction of Fig. 3). The bead 1b has an inner rim 11b and an inclined portion 12b.

In the initial state, the inner rim 11b is a flat plate along the X-Y plane. The inner rim 11b has the inner edge 19b. In the initial state, the Z-axis position of the inner rim 11b is different from that of the outer rim 1a. The inclined portion 12b connects the inner rim 11b with the outer rim 1a. In the initial state, the inclined portion 12b is inclined with respect to the outer rim 1a and the inner rim 11b.

The boundary between the inner rim 11b and the inclined portion 12b is the corner 13b of the bead 1b. The corner 13b is a convex portion of the bead 1b. A boundary 1c between the bead 1b and the outer rim 1a is the inner edge of the outer rim 1a, and also comprises another convex portion. Thus, the laminate 1 has two convex portions. In a compressed state sandwiched between the pair of housings 91 and 92, the boundary 1c is a convex portion located radially outermost of the pair of housings 91 and 92.

### A1-2: Plastic layers 5 and 6

The plastic layers 5 and 6 are each provided on the laminate 1. Specifically, the plastic layers 5 and 6 are coated on the laminate 1 such that they sandwich the laminate 1. The plastic layer 5 is disposed on the surface of the resilient layer 12 facing away from the base 11. The plastic layer 6 is disposed on the surface of the resilient layer 13 facing away from the base 11.

The plastic layers 5 and 6 are each located on the outermost surfaces of the gasket 100. The plastic layers 5 and 6 are each coating layers capable of plastic deformation. In the present embodiment, each of the plastic layers 5 and 6 is an example of the coating layer. Provision of the plastic layers 5 and 6 minimizes occurrence of crevice corrosion in the housings 91 and 92. The plastic layers 5 and 6 are each formed of a plastic material, and each are plastically deformable. Each of the plastic layers 5 and 6 includes, for example, a urethane-based resin or a silicone-based resin.

In plan view, the plastic layers 5 and 6 overlap the outer rim 1a and the bead 1b. However, in plan view, the plastic layers 5 and 6 do not overlap a part of a radially outermost portion of the outer rim 1a and do not overlap a part of the inner rim 11b of the bead 1b. In other words, in plan view, each of the plastic layers 5 and 6 partially overlaps the laminate 1. In plan view, each of the plastic layers 5 and 6 is slightly smaller than the laminate 1.

The gasket 100 is provided between the housings 91 and 92. When the housings 91 and 92 are fastened to each other by fasteners (not shown), the gasket 100 is sandwiched and compressed between the pair of housings 91 and 92. The gasket 100 is then in a compressed state, as shown in Fig. 4. In the compressed state, the gasket 100 deforms and its height reduces. The resilient layer 12 contacts the housing 91 at the boundary 1c and the inner edge 19b, and the resilient layer 13 contacts the housing 92 at the outer edge 19a and the corner 13b. The resilient layer 12 penetratingly enters the housing 91 under surface pressure, and the resilient layer 13 penetratingly enters the housing 92 under surface pressure. Thus, the sealing function of the gasket 100 is exhibited.

As described above, in plan view the plastic layer 5 overlaps at least the boundary 1c. As described above, the boundary 1c is also a convex portion located radially outermost of the pair of housings 91 and 92 in the compressed state sandwiched between the pair of housings 91 and 92. When the gasket is in the compressed state, and the resilient layer 12 penetratingly enters the housing 91 under surface pressure, the plastic layer 5 plastically deforms and reduces the gap between the gasket 100 and the housing 91. The plastic layer 5 is softened under application of heat and deforms to fill the gap.

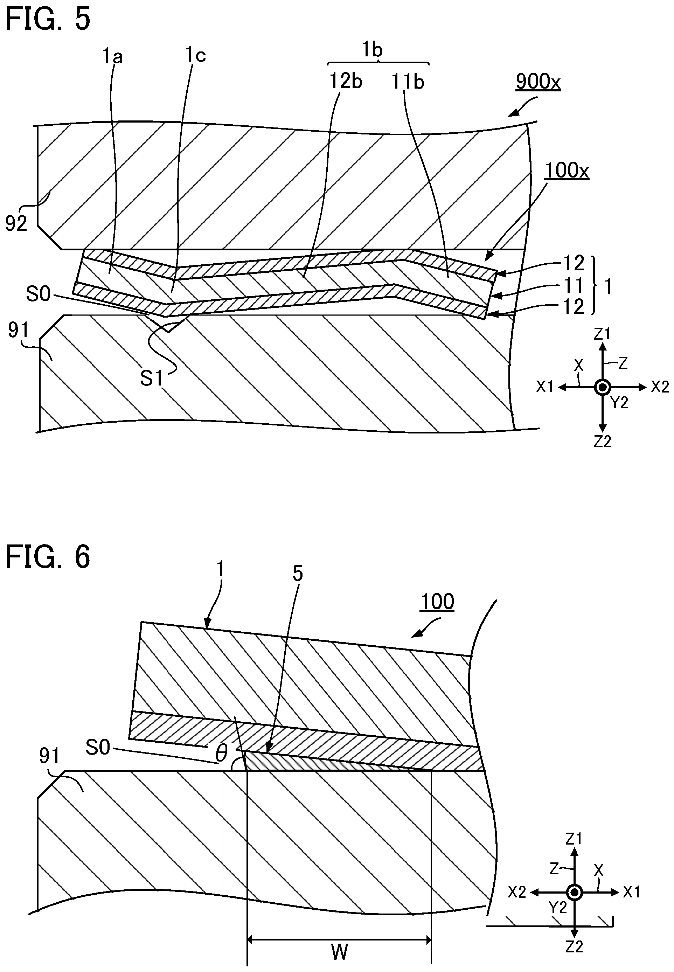

Fig. 5 is a cross-sectional view illustrating a sealing structure 900x according to a comparative example. The sealing structure 900x of the comparative example in Fig. 5 has a pair of housings 91 and 92 and a gasket 100x sandwiched and compressed therebetween. The gasket 100x has a base 11, a resilient layer 12, and a resilient layer 13. The gasket 100x does not have plastic layers 5 and 6.

A gap S0 is present at the interface between the boundary 1c of the gasket 100x and the housing 91. If saltwater ingresses into the gap S0, repeated drying and ingress of saltwater is likely to cause crevice corrosion of the metal of the housing 91.

A passive film forms on the surface of the housing 91 as a result of reaction with oxygen in air, thereby minimizing corrosion. However, if saltwater ingresses into the gap S0 between the boundary 1c and the housing 91 and there is repeated drying and ingress of saltwater, chloride ions present in the saltwater may cause the passive film to dissolve. Oxygen is required to repair the dissolved passive film. When oxygen in saltwater within the gap S0 is consumed, a concentration of dissolved oxygen in the saltwater in the gap S0 becomes lower than a concentration of oxygen dissolved in external saltwater. As a result, an oxygen concentration cell forms and corrosion proceeds.

In particular, in a case in which the housing 91 contains aluminum, chloride ions are attracted to aluminum ions, causing a concentration of chloride ions in saltwater in the gap S0 to increase. In addition, hydrogen ions are generated by a hydrolysis reaction, and as a result, a pH of saltwater in the gap S0 decreases. As a result, it becomes difficult to repair the passive film. As a result, crevice corrosion proceeds. Consequently, the surface of the housing 91 is likely to be eroded, leading to formation of a recess S1, and degradation of sealing of the housing 91 by the gasket 100x.

As shown in Fig. 4, in the present embodiment in plan view the plastic layer 5 is disposed to overlap at least the boundary 1c, and is positioned between the boundary 1c and the housing 91. Therefore, when sandwiched and compressed, the plastic layer 5 plastically deforms at the boundary 1c to reduce the gap S0 between the gasket 100 and the housing 91, thereby reducing a likelihood of crevice corrosion. Consequently, a likelihood of ingress of external fluid into the interior of the housings 91 and 92 is reduced, and a sealing performance of the gasket 100 can be maintained for a prolonged period. Accordingly, by use of the gasket 100, it is possible to improve a corrosion resistance of the housings 91 and 92. The plastic layer 6 exhibits the same functions and effects as the plastic layer 5. Examples of external fluid include liquids such as saltwater and coolant, or gases such as exhaust gas.

Fig. 6 is an enlarged view of a portion of the gasket 100 of Fig. 3. As shown in Fig. 6, when sandwiched and compressed, the plastic layer 5 of the gasket 100 deforms and reduces the gap S0 between the surface of the housing 91 and the gasket 100, i.e., to fill the gap S0.

From another point of view, the plastic layer 5 deforms and increases a contact width W between the plastic layer 5 and the surface of the housing 91. Such deformation of the plastic layer 5 causes the angle θ between the plastic layer 5 and the surface of the housing 91 to increase. Therefore, when sandwiched and compressed, the plastic layer 5 deforms and the angle θ increases.

Consequently, the gap S0 between the gasket 100 and the surface of the housing 91 reduces. Since the gap S0 thus reduces, it is possible to reduce a likelihood of crevice corrosion. Therefore, it is possible to reduce a likelihood of external fluid ingress into the housings 91 and 92. The same effect is applicable to the plastic layer 6.

Further, it is preferable that the plastic layer 5 is a coating layer having low hydrophilicity. In other words, the plastic layer 5 is preferably a coating layer having hydrophobicity. By configuring the plastic layer 5 as described, saltwater is unlikely to be drawn into the gap S0. Therefore, it is possible to inhibit crevice corrosion. The same effect is applicable to the plastic layer 6.

Furthermore, since the gasket 100 has the plastic layers 5 and 6, multiple beads need not be provided to inhibit crevice corrosion. Accordingly, an increase in width of the gasket 100 can be minimized, and a rigidity of the housings 91 and 92 need not be increased. Thus, an increase in size of the gasket 100 can be avoided, and a weight of the housings 91 and 92 can be reduced.

Furthermore, in the present embodiment, in plan view the plastic layer 6 overlaps the bead 1b. In particular, in plan view, the plastic layer 6 overlaps the corner 13b, which is a convex portion of the bead 1b. Since the corner 13b is located radially inward of the boundary 1c in the pair of housings 91 and 92, crevice corrosion is considered less likely to progress at the corner 13b than at the boundary 1c. However, there is still a likelihood that crevice corrosion may occur in the corner 13b. To address this issue, in plan view the plastic layer 6 is configured to overlap the bead 1b, such that the plastic layer 6 plastically deforms and reduces the gap between the gasket 100 and the housing 92. Accordingly, crevice corrosion can be kept to a minimum over a wide area, thereby effectively reducing a likelihood of external fluid ingress into the pair of the housings 91 and 92.

Furthermore, in the present embodiment, the plastic layers 5 and 6 overlap the outer rim 1a and the bead 1b in plan view. Since the plastic layers 5 and 6 extend over a wide area of the laminate 1, crevice corrosion can be minimized over a wide area.

The thickness of the plastic layer 5 is not particularly limited, but is preferably less than the thickness of the resilient layer 12. When sandwiched and compressed, a thinner plastic layer 5 plastically deforms more readily to fill the gap between the housing 91 and the gasket 100, than in a case in which the thickness of the plastic layer 5 is equal to or greater than the thickness of the resilient layer 12. Therefore, crevice corrosion can be minimized.

Likewise, the thickness of the plastic layer 6 is not particularly limited but is preferably less than the thickness of the resilient layer 13. When sandwiched and compressed, a thinner plastic layer 6 plastically deforms more readily than in a case in which the thickness of the plastic layer 6 is equal to or greater than the thickness of the resilient layer 13. As a result, the plastic layer 6 readily deforms and fills the gap between the housing 92 and the gasket 100, and crevice corrosion is minimized.

The thickness of the plastic layer 5 may be equal to or greater than the thickness of the resilient layer 12. Further, the thickness of the plastic layer 6 may be equal to or greater than the thickness of the resilient layer 13.

Specifically, the thickness of each of the plastic layers 5 and 6 is, for example, 15 µm or more and 100 µm or less. With the thickness of each of the plastic layers 5 and 6 falling within the above range, the plastic layers 5 and 6 more readily deform than in a case in which each thickness is outside the range. Thus, a gap between the gasket 100 and the housing 91 or the housing 92 can be reduced.

The thicknesses of the plastic layers 5 and 6 are exemplified as being the same, but need not be the same. The thickness of the plastic layer 5 is exemplified as being constant, but need not be constant and may vary. Likewise, the thickness of the plastic layer 6 is exemplified as being constant, but need not be constant and may vary.

Further, the plastic layers 5 and 6 include, for example, a urethane-based resin or a silicone-based resin. The urethane-based resin and the silicone-based resin are plastically deformable.

According to the sealing structure 900 having the gasket 100 described above, a likelihood of crevice corrosion in the housing 91 or 92 is minimized. Therefore, it is possible to minimize a likelihood of external fluid ingress into each of the housings 91 and 92. Consequently, a reliability of the sealing structure 900 is enhanced.

### B. Modifications

The embodiment illustrated above can be variously modified. Examples of modifications that can be made to each of the embodiments described above are described below. Two or more aspects freely selected from the following examples may be combined as appropriate insofar as they do not contradict each other.

In the above embodiment, in plan view each of the plastic layers 5 and 6 overlaps the outer rim 1a and the bead 1b. However, the arrangements of the plastic layers 5 and 6 are not limited to those described in the above embodiment.

### B1. First Modification

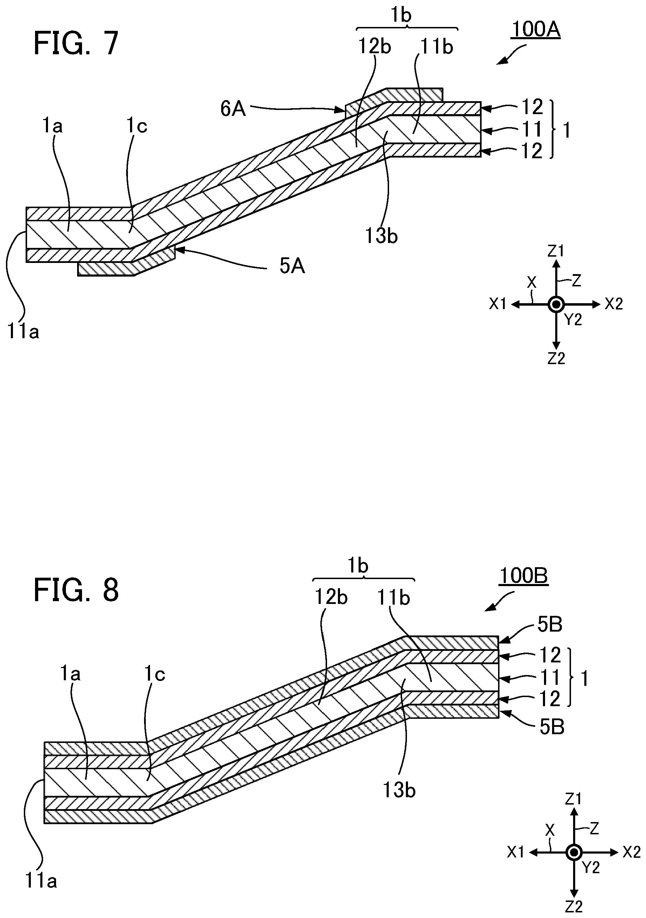

Fig. 7 is a cross-sectional view of a gasket 100A according to the first modification. In the gasket 100A shown in Fig. 7, in plan view the plastic layer 5A overlaps the boundary 1c. The boundary 1c contacts or faces the housing 91. The plastic layer 5A is disposed between the boundary 1c and the housing 91. The plastic layer 6A overlaps the corner 13b. The corner 13b contacts or faces the housing 92. The plastic layer 6A is disposed between the corner 13b and the housing 92.

Thus, in plan view, the plastic layer 5A may overlap the boundary 1c, and the plastic layer 6A may overlap the corner 13b. Similarly to the above embodiment, crevice corrosion can be minimized according to the first modification.

### B2. Second Modification

Fig. 8 is a cross-sectional view of a gasket 100B according to the second modification. In the gasket 100B of Fig. 8, in plan view each of the plastic layers 5B and 6B overlaps the entire region of the laminate 1. As a result of this arrangement of the plastic layers 5B and 6B, crevice corrosion in the inner edge 19b and the outer edge 19a can be minimized.

In the above embodiment, the bead 1b is a half-bead, but the type of bead is not limited thereto. For example, the bead may be a full bead.

### B3. Third Modification

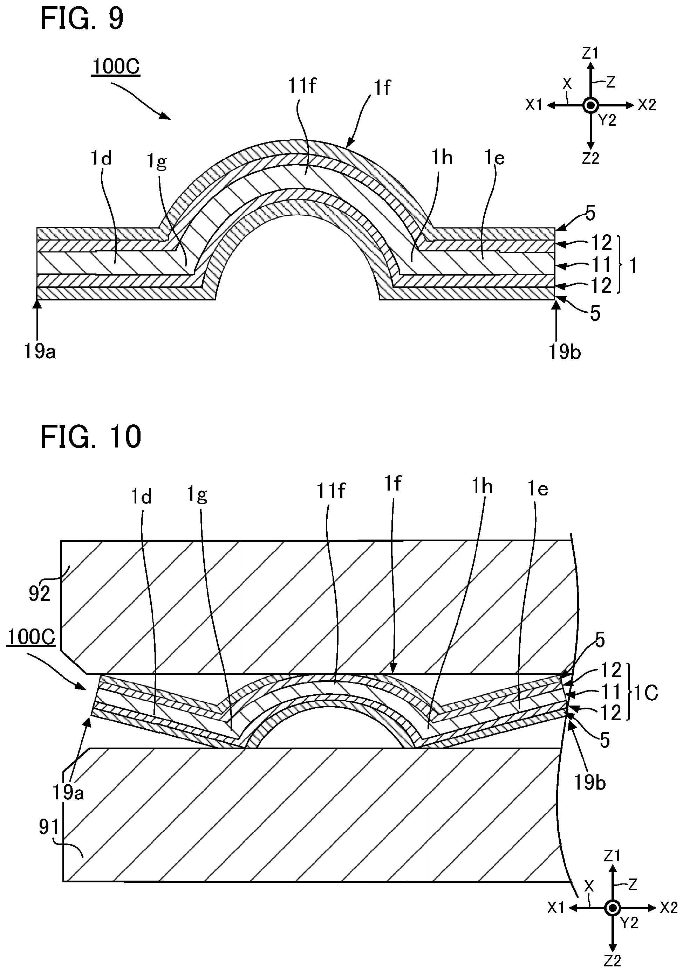

Fig. 9 is a cross-sectional view of a gasket 100C according to the third modification. Fig. 10 is a cross-sectional view of the sealing structure 900C according to the third modification.

A laminate 1C of the gasket 100C shown in Fig. 9 has an outer rim 1d, an inner rim 1e, and a bead 1f. In plan view, the laminate 1C can be seen as being divided into the outer rim 1d, the inner rim 1e, and the bead 1f. A planar shape of the laminate 1C, for example, is a square as in the above embodiment.

Although not shown, the planar shape of the outer rim 1d is a square annulus. The outer rim 1d is a part of the laminate 1C, and in plan view is the radially outermost portion. In the initial state, the outer rim 1d is a flat plate along the X-Y plane. The outer rim 1d has an outer edge 19a.

Although not shown, the planar shape of the inner rim 1e is a square annulus. The inner rim 1e is a part of the laminate 1C and in plan view is the radially innermost portion. In the initial state, the inner rim 1e is a flat plate along the X-Y plane. The inner rim 1e has an inner edge 19b. In the initial state, the Z-axis position of the inner rim 1e is the same as the Z-axis position of the outer rim 1d.

The bead 1f is connected to the outer rim 1d and is located radially inward of the outer rim 1d. The bead 1f is connected to the inner rim 1e and is located radially outward of the inner rim 1e. Accordingly, in plan view, the bead 1f is located between the outer rim 1d and the inner rim 1e and connects them. Further, although not shown, the planar shape of the bead 1f is a square annulus. The bead 1f is a full bead. The bead 1f projects upward in one of the thickness directions of the laminate 1C from the inner edge of the outer rim 1d (i.e., the upward direction of Fig. 9).

The bead 1f is a convex portion having a cross-sectional arc shape. A boundary 1g between the bead 1f and the outer rim 1d constitutes the inner edge of the outer rim 1d, and is another convex portion. An inner boundary 1h between the bead 1f and the inner rim 1e constitutes the outer edge of the inner rim 1e, and is another convex portion. Thus, the laminate 1C has three convex portions. When sandwiched and compressed between the pair of housings 91 and 92, the boundary 1g is a convex portion located radially outermost of the pair of housings 91 and 92. The bead 1f is an arc cross section, but may be a trapezoidal cross section, for example.

In the third modification, in plan view the plastic layers 5 and 6 overlap the entire region of the laminate 1C. Therefore, in plan view the plastic layers 5 and 6 overlap all of the outer rim 1d, the inner rim 1e, and the bead 1f.

As shown in Fig. 10, when sandwiched and compressed by the pair of housings 91 and 92, the gasket 100C deforms and its height reduces. The resilient layer 12 at the boundary 1g and the inner boundary 1h are in contact with the housing 91. The outer edge 19a, the inner edge 19b, and the resilient layer 13 at the top 11f of the convex portion of the bead 1f are in contact with the housing 92. The resilient layer 12 penetratingly enters the housing 91 under surface pressure, and the resilient layer 13 penetratingly enters the housing 92 under surface pressure. Thus, the sealing performance of the gasket 100C is attained.

In a gasket 100C, similarly to the gasket 100 of the above embodiment, in plan view the plastic layer 5 overlaps at least the boundary 1g. Therefore, when sandwiched and compressed, the plastic layer 5 on the boundary 1g plastically deforms and reduces the gap between the gasket 100C and the housing 91. Since the gap is reduced, a likelihood of crevice corrosion is reduced, and, a likelihood of external fluid ingress into the housings 91 and 92 is reduced. Therefore, the sealing property of the gasket 100C is enhanced.

From another point of view, as in the above embodiment, the plastic layer 5 deforms and increases the contact width W between the plastic layer 5 and the surface of the housing 91. Since the plastic layer 5 is thus deformed, the angle θ between the plastic layer 5 and the surface of the housing 91 is increased. Accordingly, when sandwiched and compressed, the plastic layer 5 deforms such that the angle θ is increased. Therefore, a likelihood of external fluid ingress into the housings 91 and 92 is reduced.

Further, in plan view the plastic layer 6 is provided to overlap the top 11f and the inner boundary 1h. Therefore, with respect to the top 11f and the inner boundary 1h, it is possible to reduce or delay crevice corrosion in the housing 92.

Furthermore, according to the gasket 100C, since it has the plastic layers 5 and 6, unlike in the conventional art there is no need to provide multiple beads to reduce crevice corrosion. Accordingly, an increase in width of the gasket 100C can be minimized, and a rigidity of the housings 91 and 92 need not be increased. Thus, an increase in size of the gasket 100C can be avoided, and a weight of the housings 91 and 92 can be readily reduced.

### C: Appendix

The following aspects are derivable from the embodiment and modifications described above.

A gasket according to a first aspect of the present disclosure is a gasket disposed between a pair of housings, the gasket including: a laminate including: a plate-like base including a metal; and a resilient layer provided on the base; and a coating layer provided on the resilient layer and subject to plastic deformation, in which the laminate includes: an annular outer rim, and an annular bead located radially inward of the outer rim and connected to the outer rim; and, in plan view from a thickness direction of the laminate, the coating layer overlaps at least a boundary between the outer rim and the bead. The coating layer may be a plastic layer.

According to the first aspect, when the gasket is sandwiched and compressed by the pair of housings, the coating layer on the boundary deforms and reduces the gap between the gasket and the housing. This reduces the likelihood of crevice corrosion and of ingress of the external fluid into the housings. Furthermore, unlike the conventional art, in the gasket according to the first aspect it is not necessary to provide multiple beads to reduce crevice corrosion. Therefore, an increase in the width of the gasket can be minimized, and an increase in rigidity of the housing can be avoided. As a result, enlargement of the gasket is avoided and reduction in the weight of the housing can be facilitated.

In a second aspect which is a preferred example of the first aspect, in plan view the coating layer overlaps the bead. The coating layer may be a plastic layer.

According to the second aspect, the coating layer deforms not only at the boundary but also at the bead, and reduces the gap between the gasket and the housing. Thus, crevice corrosion is minimized over a wide range. Accordingly, it is possible to effectively reduce a likelihood of ingress of the external fluid into the pair of housings.

In a third aspect, which is a preferred example of the first or second aspect, in plan view the coating layer overlaps the outer rim and the bead. The coating layer may be a plastic layer.

According to the third aspect, since the coating layer is provided over a wide area of the laminate, it is possible to minimize crevice corrosion over a wide area.

In a fourth aspect, which is a preferred example of any of the first to third aspects, a thickness of the coating layer is less than a thickness of the resilient layer. The coating layer may be a plastic layer.

According to the fourth aspect, as compared with a case in which the thickness of the coating layer is greater than the thickness of the resilient layer, the coating layer readily deforms and fills the gap between the housing and the gasket. Thus, crevice corrosion is minimized.

In a fifth aspect which is a preferred example of any one of the first to fourth aspects, the coating layer includes a urethane-based or silicone-based resin. The coating layer may be a plastic layer.

The urethane-based resin and the silicone-based resin are plastically deformable. Furthermore, since both a urethane-based resin and a silicone-based resin exhibit excellent abrasion resistance, it is preferable that vehicle gaskets include either the urethane-based resin or the silicone-based resin.

A gasket according to a sixth aspect of the present disclosure is disposed between a pair of housings, the gasket including: a laminate including: a plate-like base including a metal; and a resilient layer provided on the base; and a coating layer provided on the resilient layer and subject to plastic deformation, in which the laminate includes: an annular outer rim; and an annular bead located radially inward of the outer rim and connected to the outer rim; in plan view from a thickness direction of the laminate, the coating layer overlaps at least a boundary between the outer rim and the bead; and, when sandwiched and compressed between the pair of housings, the coating layer deforms and increases a contact width between the coating layer and a surface of one of the pair of housings.

According to the sixth aspect, when a gasket is sandwiched and compressed by the pair of housings, the gasket deforms and increases the contact width on the boundary. Accordingly, the gap between the gasket and the housing can be reduced, and a likelihood of crevice corrosion and of the ingress of external fluid into the housings is reduced. Furthermore, unlike in the conventional art, in this gasket it is not necessary to provide multiple beads to reduce crevice corrosion. Therefore, an increase in the width of the gasket can be minimized, and an increase in rigidity of the housing can be avoided. As a result, enlargement of the gasket is avoided, and reduction in the weight of the housing can be facilitated.

A gasket according to a seventh aspect of the present disclosure is a gasket disposed between a pair of housings, the gasket including: a laminate including: a plate-like base including a metal; and a resilient layer provided on the base; and a coating layer provided on the resilient layer and subject to plastic deformation, in which the laminate includes: an annular outer rim; and an annular bead located radially inward of the outer rim and connected to the outer rim; in plan view from the thickness direction of the laminate, the coating layer overlaps at least a boundary between the outer rim and the bead; and, when sandwiched and compressed between the pair of housings, the coating layer deforms and increases an angle of the coating layer relative to a surface of one of the pair of housings.

According to the seventh aspect, when sandwiched and compressed by the pair of housings, the gasket deforms and increases the angle. Therefore, compared with a case in which the angle is small, the gap can be reduced, and a likelihood of crevice corrosion and ingress of the external fluid into the housings can be reduced. Furthermore, unlike the conventional art, in this gasket it is not necessary to provide multiple beads to reduce crevice corrosion. Therefore, an increase in the width of the gasket can be minimized, and an increase in rigidity of the housing can be avoided. As a result, enlargement of the gasket is avoided, and reduction in the weight of the housing can be facilitated.

A gasket according to an eighth aspect of the present disclosure is a gasket disposed between a pair of housings, the gasket including: a laminate including: a plate-like base including a metal; and a resilient layer provided on the base; and a coating layer provided on the resilient layer and subject to plastic deformation, in which the laminate includes: an annular outer rim; and an annular bead located radially inward of the outer rim and connected to the outer rim; in plan view from the thickness direction of the laminate, the coating layer overlaps at least a boundary between the outer rim and the bead; and, when sandwiched and compressed between the pair of housings, the coating layer deforms and reduces a gap between the coating layer and a surface of one of the pair of housings.

According to the eighth aspect, when sandwiched and compressed by a pair of housings, the gap can be reduced. This reduces the likelihood of crevice corrosion and of ingress of the external fluid into the housings. Furthermore, unlike the conventional art, in this gasket it is not necessary to provide multiple beads to reduce crevice corrosion. Therefore, an increase in the width of the gasket can be minimized, and an increase in rigidity of the housing can be avoided. As a result, enlargement of the gasket is avoided, and reduction in the weight of the housing can be facilitated.

A sealing structure according to a ninth aspect of the present disclosure includes a pair of housings; and a gasket disposed between the pair of housings, the gasket including a laminate including: a plate-like base including a metal; and a resilient layer provided on the base; and a coating layer provided on the resilient layer and subject to plastic deformation, in which the laminate includes: an annular outer rim; and an annular bead located radially inward of the outer rim and connected to the outer rim; in plan view from the thickness direction of the laminate, the coating layer overlaps at least a boundary between the outer rim and the bead; and, when sandwiched and compressed between the pair of housings, the coating layer deforms and reduces a gap between the coating layer and a surface of one of the pair of housings.

According to the ninth aspect, when the gasket is sandwiched and compressed by the pair of housings, the coating layer on the boundary deforms and reduces the gap between the gasket and the housing. As a result, the likelihood of crevice corrosion and of ingress of the external fluid into the housings is reduced. Therefore, a highly reliable sealing structure can be provided. Furthermore, unlike the conventional art, in this gasket it is not necessary to provide multiple beads to reduce crevice corrosion. Therefore, an increase in the width of the gasket can be minimized, and an increase in rigidity of the housing can be avoided. As a result, enlargement of the gasket can be avoided and reduction in the weight of the housing can be facilitated.

### Description of Reference Signs

1... laminate, 1C... laminate, 1a... outer rim, 1b... bead, 1c... boundary, 1d... outer rim, 1e...inner rim, 1f... bead, 1g... boundary, 1h... inner boundary, 5... plastic layer, 6... plastic layer, 11... base, 11b... inner rim, 12b... inclined portion, 13b... corner, 11f... top, 12... resilient layer, 13... resilient layer, 19a... outer edge, 19b... inner edge, 91... housing, 92... housing, 100... gasket, 900... sealing structure, S0... gap, W... contact width, θ... angle.

## Claims

1. A gasket disposed between a pair of housings, the gasket comprising:
a laminate including:
a plate-like base including a metal; and
a resilient layer provided on the base; and
a coating layer provided on the resilient layer and subject to plastic deformation,
wherein:
the laminate includes:
an annular outer rim, and
an annular bead located radially inward of the outer rim and connected to the outer rim, and
wherein, in plan view from a thickness direction of the laminate, the coating layer overlaps at least a boundary between the outer rim and the bead.

2. The gasket according to claim 1, wherein in plan view the coating layer overlaps the bead.

3. The gasket according to claim 1 or claim 2, wherein in plan view the coating layer overlaps the outer rim and the bead.

4. The gasket according to any one of claims 1 to 3, wherein a thickness of the coating layer is less than a thickness of the resilient layer.

5. The gasket according to any one of claims 1 to 4, wherein the coating layer includes a urethane-based or a silicone-based resin.

6. The gasket according to claim 1,
wherein, when sandwiched and compressed between the pair of housings, the coating layer deforms and increases a contact width between the coating layer and a surface of one of the pair of housings.

7. The gasket according to claim 1,
wherein, when sandwiched and compressed between the pair of housings, the coating layer deforms and increases an angle of the coating layer relative to a surface of one of the pair of housings.

8. The gasket according to claim 1,
wherein, when sandwiched and compressed between the pair of housings, the coating layer deforms and reduces a gap between the coating layer and a surface of one of the pair of housings.

9. A sealing structure comprising:
a pair of housings; and
the gasket according to claim 1.
